# EUROPÄISCHE PATENTSCHRIFT

(11) **EP 0 456 971 B1**
(45) Veröffentlichungstag und Bekanntmachung des Hinweises auf die Patenterteilung: **31.08.1994**
(21) Anmeldenummer: 91102678.9
(22) Anmeldetag: 23.02.1991
(51) Int. Cl.: B29D 30/38

(54) **Verfahren zur Herstellung von armierten Gummibahnen als Halbzeug für die Produktion von Reifen**
Method for making reinforced rubber webs used as semi-finished products in tyre manufacture
Procédé pour la fabrication de bandes de caoutchouc renforcées servant de produit intermédiaire dans la fabrication de pneus

(30) Priorität: 17.05.1990 DE 4015864
(43) Veröffentlichungstag der Anmeldung: 21.11.1991
(73) Patentinhaber: HERMANN BERSTORFF Maschinenbau GmbH, D-30627 Hannover (Kleefeld) (DE)
(72) Erfinder: Borchardt, Horst, Dipl.-Ing., W-3167 Burgdorf (DE)

(56) Entgegenhaltungen:
- EP-A- 0 288 609
- AU-B- 6 049 880
- DE-A- 2 055 456
- GB-A- 2 132 573
- US-A- 2 281 976
- US-A- 3 287 195
- US-A- 3 479 238

## Beschreibung

Die Erfindung betrifft ein Verfahren zur Herstellung von armierten Gummibahnen als Halbzeug für die Produktion von Reifen gemäß Oberbegriff des Anspruchs 1.

Gummiplatten zum Aufbau von Reifenkarkassen werden üblicherweise in Kalanderanlagen hergestellt. Dazu wird Armierungscord aus Textilfasern parallel nebeneinander liegend und mit Schußfäden zu einem lockeren Gewebe verarbeitet aus einem Cordspeicher abgezogen und in den Spalt zwischen zwei Kalanderwalzen geleitet. Hier wird der Cord beidseitig mit Gummi belegt und zu einer Vorrichtung zum Zerreißen der Schußfäden weitergeleitet. Nach dem Zertrennen dieser Schußfäden werden von der armierten Gummibahn unter einem definierten Winkel zur Bahnkante Stücke abgeschnitten. Diese können dann durch eine Überlappungsverbindung der Bahnkanten zu einer neuen Bahn mit einer unter einem Winkel zur Bahnkante verlaufenden Armierung zusammengefügt werden.

Wie aus der DE-AS 15 79 264 bekannt ist, gab es in der Vergangenheit immer wieder Probleme mit nicht zertrennten Schußfäden, die Inhomogenitäten in der Karkasse des Reifens darstellten. Diese Inhomogenitäten im Reifen führten in der Regel zu ungleichmäßigen Belastungen der Armierungscorde, die gerade bei Hochgeschwindigkeitsreifen wegen der damit verbundenen Gefahr der Reifenzerstörung nicht verantwortbar sind. So konnte beispielsweise auch mit der in dieser Druckschrift vorgestellten Vorrichtung zum Zerreißen von Schußfäden in einer Reifencordbahn nicht der gewünschte Zerstörungsgrad erreicht werden, um den Anforderungen an modernen Hochgeschwindigkeitsreifen zu genügen.

Neben dem Verfahren zur Herstellung von armierten Gummibahnen auf Kalanderanlagen wurde vorgeschlagen, Armierungscorde über einen Kreisumfang parallel zueinander angeordnet in einen Extruderkopf zu leiten und dort mit Kautschuk derart zu umgeben, daß ein armierter Schlauch entsteht (DE-OS 24 32 199). Dieser Schlauch wird dann wendelförmig zu einem fortlaufenden Gummistreifen aufgeschnitten, dessen Armierungsfasern unter einem bestimmten Winkel orientiert sind.

Eine dritte Entwicklungsrichtung wurde in der DE-AS 11 30 157 beschrieben. Dort wurde eine Vorrichtung vorgestellt, mit der ein auf einer Aufbautrommel aufgelegtes dünnes Fell einer Kautschukmischung mit einem kautschukbeschichteten Cordfaden belegt wird. Dazu wird der Cordfaden aus einem Cordspeicher abgezogen und einem Führungsrad zugeleitet. Dieses horizontal über der Oberfläche der Aufbautrommel verfahrbare und um seine vertikale Achse schwenkbare Führungsrad vollführt während einer Umdrehung der Aufbautrommel mehr als eine Hin- und Zurückbewegung. Dadurch kommt es an den Richtungsänderungspunkten nach etwas mehr als einem Aufbautrommelumlauf zu einer Überkreuzung des Cordfadens und einer anschließenden Ablage des Cordfadens parallel neben der Cordfadenlage der vorhergehenden Umdrehung der Aufbautrommel. Durch Variation der Trommelumfangsgeschwindigkeit und der horizontalen Geschwindigkeit des Cordführungsrades über der Trommeloberfläche läßt sich das Kautschukfell mehr oder weniger dicht mit einem Cordfaden belegen. Dabei liegen die Cordfadenabschnitte im wesentlichen parallel zueinander, wenngleich im Bereich der Richtungsänderungspunkte der Cordfaden einer gekrümmten und zu den benachbarten Cordlagen nicht parallelen Bahn folgt. Außerdem bildet sich durch eine solche Fellbelegung eine durchweg rautenförmige Armierungsstruktur mit einer Vielzahl von Cord-Kreuzungsstellen.

Ein Nachteil dieser Vorrichtung ist demnach in der Begrenzung des tatsächlich erreichbaren maximalen Belegungswinkels zu sehen, denn ein Cordfaden, und schon gar nicht ein mit Kautschuk beschichteter, läßt sich keinen beliebig kleinen Umlenkradius aufzwingen. Je größer aber der tatsächlich realisierbare Umlenkradius ist, desto Kleiner ist auch der Cordbelegungswinkel und damit der Bereich nicht paralleler Cordlagen im Bereich der Richtungsänderungspunkte des Cordfadens auf dem Kautschukfell. Ein weiterer Nachteil ist, daß mit dieser Vorrichtung keine Gummibahn herstellbar ist, die über zueinander parallele und einander nicht kreuzende Cordfäden verfügt.

Zur Vermeidung dieser Nachteile wurden in der DE-OS 37 12 263 ein Verfahren und eine Vorrichtung zur Herstellung von Reifenausgangsmaterial sowie eine zugehörige Wickel- und Schneidmaschine vorgestellt.

Hier wird Verstärkungsmaterial (Stahldrähte, Fasern, Fäden) in einem Extruderkopf mit unvulkanisiertem Gummi umgeben, so daß ein fortlaufendes Band entsteht. Dieses Band wird auf einer endlosen Riemenwickeleinrichtung entlang einer Schraubenbahn geführt. Entsprechend der Schraubenwindungen grenzen die Bahnräder dicht aneinander und werden im Stumpfstoß mit anschließender Pressung und Glättung der Randbereiche so miteinander verbunden, daß ein gewickeltes Materialrohr entsteht, das über den Bereich der Riemenwickeleinrichtung hinaus wächst und von dem immer wieder ein Rohrstück abgetrennt wird. Das abgetrennte Rohrstück wird anschließend entfernt und etwa parallel zur Rohrachse oder entlang einer Schraubenlinie spannungsfrei aufgeschnitten, um armierte Gummiplatten zu erhalten.

Nachteilig bei dieser Technik ist, daß nicht alle werkstofftechnisch interessanten Cordmaterialien mit unvulkanisiertem Gummi ummantelbar sind. Zudem zeigt gerade die Verbindung des Gummibandes zu einem fortlaufenden Rohr die größten Probleme auf. Die in dieser Druckschrift als bevorzugt beschriebene Verbindung der Bandränder im Stumpfstoßverfahren, bedarf in der Regel einer beidseitigen Glättung durch Pressen des entstehenden Materialwulstes. Dabei kommt es leicht zu Inhomogenitäten im Fadenabstand, denn verpreßtes Gummi drückt sich zwischen die Armierungsfäden.

Schließlich ist die vorgeschlagene Anlage im Bereich ihrer Riemenwickelmaschine apparativ sehr aufwendig, weshalb ihre Anwendung einen vergleichweise hohen Investitions- und Wartungsaufwand erwarten läßt.

Aus der GB-A-21 32 573, von welcher der Oberbegriff des Anspruchs 1 ausgeht, ist bekannt, eine Gummiplatte abzuziehen und diese mehrlagig auf eine Aufbautrommel aufzuwickeln. Danach werden schraubenförmige Armierungsdrähte auf die Gummiplatte gewickelt und anschließend erfolgt eine weitere Belegung mittels einer Gummibahn. Ein Spleißvorgang ist aus dieser Entgegenhaltung nicht bekannt.

Nach alledem liegt der Erfindung die Aufgabe zugrunde, ein Verfahren und eine Vorrichtung zur Herstellung von armierten Gummibahnen zu schaffen, mit deren Hilfe die bekannten Armierungscorde oder -fäden verarbeitbar sind. Zudem soll gewährleistet sein, daß das Armierungsmaterial über die gesamten Abmessungen der Gummibahn eine homogene Verteilung aufweist.

Die erfindungsgemäße Lösung dieser Aufgabe ist durch die folgenden Verfahrensmerkmale gekennzeichnet.

Aus einem Gummibahnenspeicher wird eine Gummiplatte abgezogen, die auf einer Aufbautrommel in einer oder mehreren Lagen spiralförmig zu einem Gummiwickel aufgewickelt und dabei von einer Andrückwalze gegen die Aufbautrommel gedrückt werden.

Anschließend wird ein Armierungscordfaden von einer Cordspuleinrichtung abgezogen und unter voreingestellter Spannung und mit vorgewähltem Fadenabstand schraubenförmig auf die mit der Aufbautrommel rotierenden Gummiplatte aufgewickelt.

Nach dem Abtrennen des Cordes wird aus dem Gummibahnenspeicher erneut Gummi abgezogen und in einer oder mehreren Lagen auf den cordbelegten Gummiwickeln aufgedrückt. Der so entstandene armierte Wickel wird dann mittels einer Schneidvorrichtung unter einem zur Trommelachse verlaufenden Winkel schraubenförmig aufgetrennt, wobei das Auftrennen in Abhängigkeit vom Umfang der Aufbautrommel und der herzustellenden Bahnbreite mit einem oder mehreren im vorgewählten Abstand und Winkel liegenden Schnitten erfolgt.

Das oder die aufgetrennte(n) Wickelstück(e) werden anschließend auf ein Transportband abgelegt und zu einer Spleißeinrichtung transportiert, während die Aufbautrommel zur erneuten Herstellung eines armierten Wickels mit Gummi belegt wird.

In der Spleißvorrichtung wird das zugeführte eine Ende der armierten Gummibahn mit dem freien Ende der vorherigen Gummibahn unter Abschnitt des über die letzten Fäden der beiden Stücke überstehenden Gummis frei von Fadenüberlappungen und ohne Materialdickstellen verbunden.

Die so in bezug auf ihre Fadenlage und ihren Fadenabstand homogen aneinander gespleißten Bahnen werden abschließend über eine Abzugseinrichtung zu einer Aufwickeleinrichtung gefördert, wo sie unter Zwischenlage eines Mitläuferbandes aufwickelbar sind.

In einer vorteilhaften Ausgestaltung der Erfindung erfolgt das Abwickeln der Gummilagen von dem Gummibahnenspeicher, das Anlegen an die Aufbautrommel, das Abschneiden einer vorgewählten Lagenanzahl sowie das Abschneiden der Gummibahnen und der Spleißvorgang von einem Rechner gesteuert. Zudem überwacht und steuert der Rechner beim Aufwickeln des Armierungscords auf die Gummiplatte den Fadenabstand und die Fadenspannung sowie das Transportieren und Aufwickeln der Gummibahn.

Zur besseren Fixierung der Gummiplatte bzw. des aufgetrennten Wickels auf der Aufbautrommel und/oder der Andrückwalze können diese über jeweil seine Unterdruckeinrichtung auf diesen Trommeln gehalten werden. Außerdem ist das Verfahren dadurch ergänzbar, daß die Gummibahn vor dem und/oder beim Aufwickeln auf die Aufbautrommel temperiert wird, und daß die Andrückwalze synchron mit der Aufbautrommel angetrieben wird.

Zur Durchführung des erfindungsgemäßen Verfahrens sind Trommelaufbau- und Spleißvorrichtungen vorgesehen, deren Ausführungsbeispiele sich anhand von Zeichnungen verdeutlichen lassen. Dabei zeigt:
- Fig. 1: eine schematische Darstellung einer Trommelaufbaumaschine.
- Fig. 2: eine Seitenansicht einer Aufbautrommel mit einer Cordaufwickeleinrichtung.
- Fig. 3: eine Übersichtsdarstellung einer Spleißvorrichtung.
- Fig. 4: einen vergrößerten Ausschnitt A gemäß Fig. 3.

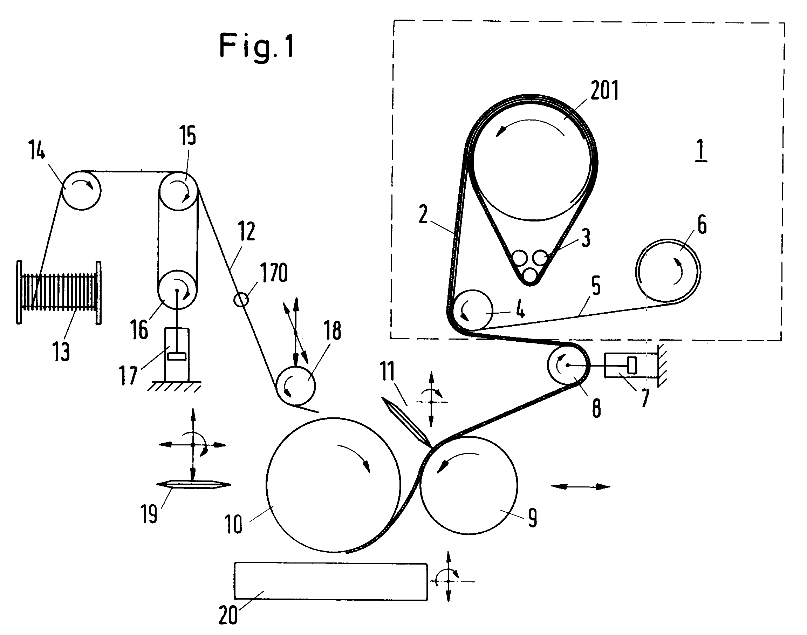

Die in Fig. 1 dargestellte Trommelaufbaumschine verfügt über einen Gummibahnenspeicher 1, in dem eine Gummibahn 2 von einem Materialballen 201 mit Hilfe einer angetriebenen, aus untereinander verbundenen Walzen bestehenden Separiereinrichtung 3 sowie einer Umlenkwalze 4 von einer Mitläuferfolie 5 befreibar ist. Die Mitläuferfolie 5 wird dabei von einer Aufwickelvorrichtung 6 aufgenommen, während die Gummibahn 2 den Gummibahnenspeicher 1 über eine Zugregelungswalze 8, die mit einem zugkraftregelnden Zylinder 7 verbunden ist, verläßt.

Die Gummibahn 2 gelangt so zu einer Andrückwalze 9, die diese gegen eine Aufbautrommel 10 drückt. Bei Rotation der Aufbautrommel 10 wird eine voreinstellbare Anzahl von Gummilagen zu einem schlauchförmigen Wickel aufgebaut. Zudem ist im Bereich der Andrückwalze 9 eine Abschneidvorrichtung 11 vorgesehen, die aus einem Messer besteht, das gegen die Andrückwalze 9 schwenkbar und parallel zur Achse der Andrückwalze 9 verfahrbar ist. Nach Aufwicklung der Soll-Lagen wird die Gummiplatte mittels der Abschneidvorrichtung 11 durchtrennt.

Eine derart auf der Aufbautrommel 10 abgelegte Gummiplatte ist nun mit einem Cord belegbar. Ein Armierungsfaden 12, beispielsweise aus Textilfaser oder Stahl ist dann aus einer Cordspuleinrichtung 13 über wenigstens eine Abzugsrolle 14 und einer Zugregelungseinrichtung abziehbar. Die Zugregelungseinrichtung besteht im einfachsten Fall aus zwei Rollen 15, 16, von denen eine über eine die Zugkraft regelnde Einheit 17 verfügt. Außerdem besteht die Möglichkeit, die auf den Cord wirkende Zugkraft über einen geeigneten Sensor 170 zu messen und mit Hilfe eines Steuerungsrechners über die Zugkraft regelnde Einheit 17 auf den gewünschten Fadenspannungswert zu korrigieren.

Der Cord 12 ist sodann über eine Aufwickeleinrichtung zur Aufbautrommel 10 leitbar, wo dieser unter definierter und voreingestellter Spannung und unter Beibehaltung des vorbestimmten Fadenabstandes auf die auf der Aufbautrommel 10 befindliche Gummiplatte aufwickelbar ist.

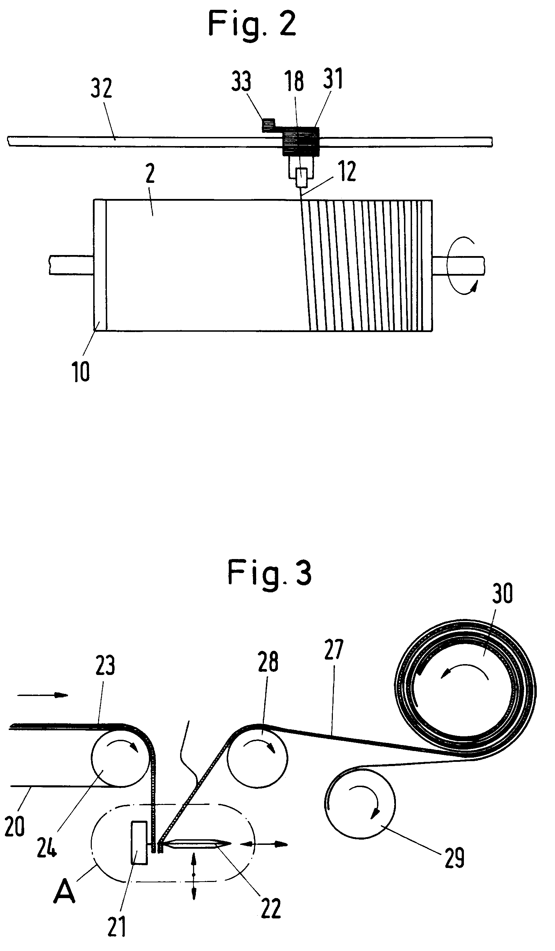

Die Aufwickeleinrichtung besteht im wesentlichen aus einem Führungsrad 18, das den Cord aufnimmt und welches wenigstens parallel und radial zur Achse der Aufbautrommel 10 verfahrbar ist. Die mit konstantem Abstand schraubenförmige Aufwicklung des Cordes erfolgt bei Rotation der Aufbautrommel 10, bei gleichzeitigem Verfahren des Führungsrades 18 parallel zur Aufbautrommelachse. Die exakte Position des Führungsrades 18 ist über einen Wegsensor 33 ermittelbar, der mit einem Rechner verbunden ist. Dieser Rechner steuert seinerseits einen Motor 31 an, der das Führungsrad 18 auf einer zur Aufbautrommelachse parallelen Schiene 32 trägt (Fig. 2).

Das Anlegen des Cordes zu Begrinn der Aufwicklung und das Abschneiden am Ende des Aufwickelvorganges erfolgt automatisch mit nicht dargestellten Cordanlege- und Cordtrennvorrichtungen. Nach dem Aufwickeln der Cordlage können, wie zu Anfang beschrieben, eine voreinstellbare Anzahl Gummilagen aufgewickelt werden. Ein weiteres Messer 19 gehört zur Wickelauftrennvorrichtung, mit der die armierte Gummiplatte über einen oder mehrere Schnitte spannungsfrei auftrennbar ist. Dazu ist dieses Messer 19 in wenigstens zwei Achsen verstellbar angeordnet.

Mit einem Transportband 20 ist dann der aufgetennte Wickel als armierte Gummibahn 23 zur Spleißeinrichtung transportierbar. Diese in Fig. 3 dargestellte Spleißeinrichtung besteht im wesentlichen aus einem Spleißbalken 21 und einem Spleißmesser 22, die die Gummibahn 23 nach dem Passieren einer Umlenkrolle 24 des Transportbandes 20 vertikal von oben erreicht.

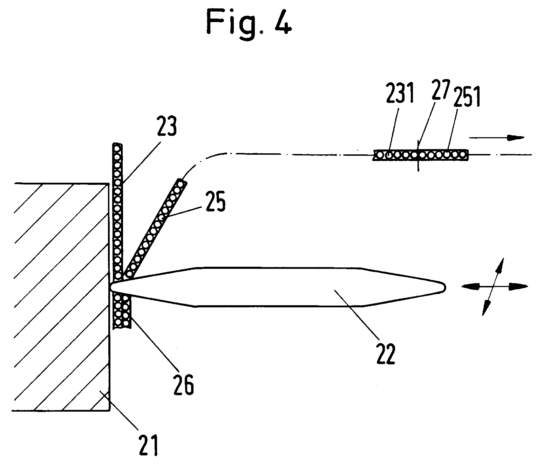

Hier wird der Anfang der zugeförderten Gummibahn 23 und das Ende der vorherigen Gummibahn 25 parallel nebeneinander angeordnet und durch das Spleißmesser 22 unter Abschnitt der überstehenden, armierten Gummibahnenden 26 miteinander verbunden (Fig. 4). Dazu ist das Messer 22 zunächst horizontal gegen den Spleißbalken 21 anpreßbar und zur Entfernung der Materialreste 26 wenigstens horizontal gegen diesen verfahrbar.

Die derart im Verbindungsbereich 27 ohne Fadenüberlappungen und ohne Materialanhäufungen hergestellte homogene Gummibahn 231, 251 ist anschließend über wenigstens eine Abzugrolle 28 und unter Zwischenlage einer Mitläuferfolie von einem Mitläuferabwickler 29 auf eine Aufwickelvorrichtung 30 aufwickelbar.

## Patentansprüche

1. Verfahren zur Herstellung von armierten Gummibahnen als Halbzeug für die Herstellung von Reifen, wobei aus einem Gummibahnenspeicher (1) eine Gummiplatte (2) abgezogenwird, auf einer Aufbautrommel (10) werden eine oder mehrere Lagen der Gummiplatte (2) zu einem Gummiwickel spiralförmig aufgewickelt und dabei von einer Andrückwalze (9) gegen die Trommel (10) gedrückt, von einer Cordspuleinrichtung (13) wird Armierungscord (12) unter voreingestellter Spannung und mit vorgewähltem Fadenabstand schraubenförmig auf die Gummiplatte (2) aufgewickelt, der Cord wird abgetrennt, aus dem Gummibahnenspeicher (1) wird erneut Gummi abgezogen und in einer oder mehreren Lagen auf die cordbelegte Gummiplatte (23) aufgedrückt, der so entstandene armierte Gummiwickel (23) wird mittels einer Schneidvorrichtung (11) unter einem zur Trommelachse verlaufenden Winkel schraubenförmig und spannungsfrei aufgetrennt, wobei das Auftrennen in Abhängigkeit vom Umfang der Aufbautrommel (10) und der herzustellenden Bahnbreite mit einem oder mehreren im vorgewählten Abstand und Winkel liegenden Schnitten erfolgt, das oder die aufgetennte(n) Wickelstück(e) werden auf ein Transportband (20) abgelegt und zu einer Spleißvorrichtung transportiert, während die Aufbautrommel (10) erneut mit Gummilagen belegt wird,
**dadurch gekennzeichnet,**
daß in der Spleißvorrichtung das zugeführte Ende des Wickelstückes mit dem freien Ende des vorherigen Wickelstückes unter Abschnitt der über die letzten Fäden der beiden Stücke überstehenden Gummis verbunden wird und
daß die so aneinander gespleißten Bahnen abschliessend über eine Abzugseinrichtung zu einer Aufwickeleinrichtung gefördert und unter Zwischenlage eines Mitläuferbandes aufgewickelt werden.

2. Verfahren gemäß Anspruch 1,
**dadurch gekennzeichnet,**
daß ein Rechner alle Verfahrensschritte steuert und regelt.

3. Verfahren gemäß Anspruch 1,
**dadurch gekennzeichnet,**
daß die Gummiplatte bzw. der aufgetrennte Wickel auf der Aufbautrommel über eine Unterdruckeinrichtung auf dieser gehalten wird.

4. Verfahren gemäß den Ansprüchen 1 bis 3,
**dadurch gekennzeichnet,**
daß die Gummiplatte vor und/oder beim Aufwickeln auf die Aufbautrommel temperiert wird.

5. Verfahren gemäß den Ansprüchen 1 bis 4,
**dadurch gekennzeichnet,**
daß die Andrückwalze synchron mit der Aufbautrommel angetrieben wird.

6. Verfahren gemäß Anspruch 5,
**dadurch gekennzeichnet,**
daß die Gummibahn mit Hilfe einer Unterdruckeinrichtung an der Andrückwalze fixiert wird.

## Claims

1. Process for producing reinforced rubber sheets as semi-finished products for the manufacture of tyres, a rubber sheet (2) being drawn from a rubber sheet accumulator (1), one or more plies of the rubber sheet (2) being helically wound on a building drum (10) such as to form a rubber sleeve and pressed against the drum (10) by a pressure roll (9), reinforcing cord being helically wound on the rubber sheet (2) by a cord reeling device (13) at a preset tension and filament distance, the cord being severed, a new rubber sheet being drawn from the rubber sheet accumulator (1) and pressed in one or several plies on the cord-covered rubber sheet (23), the reinforced rubber sleeve (23) thus produced being helically severed by a cutting device (11) in a tension-free manner at a certain angle relative to the drum axis, the severing being carried out by one or several cuts at a preselected distance and angle depending on the circumference of the building drum (10) and the sheet width to be produced, the severed sleeve piece(s) being placed on a conveyer belt (20) and conveyed to a splicing unit, while the building drum (10) is covered again with new rubber plies,
**characterized in that**
the front end of the conveyed sleeve piece is connected to the free rear end of the previous sleeve piece in the splicing unit while the rubber projecting beyond the last filaments of both pieces is cut, and, that the sheets spliced together in such a manner are finally conveyed via a take-off device to a winding device and wound up by using a liner as intermediate layer.

2. Process as recited in claim 1,
**characterized in that**
all process steps are controlled by a computer.

3. Process as recited in claim 1,
**characterized in that**
the rubber sheet and/or the severed sleeve are held on the building drum by means of a vacuum device.

4. Process as recited in claims 1 to 3,
**characterized in that**
the rubber sheet is heated/cooled prior to and/or during the winding on the building drum.

5. Process as recited in claims 1 to 4,
**characterized in that**
the pressure roll is driven synchronously with the building drum.

6. Process as recited in claim 5,
**characterized in that**
the rubber sheet is fixed on the pressure roll by means of a vacuum device.

## Revendications

1. Appareil pour la production de bandes caoutchouc renforcées en tant que semi-produits pour la fabrication de pneus, une plaque caoutchouc (2) étant tirée d'un accumulateur de bandes caoutchouc (1), une ou plusieurs couches de la plaque caoutchouc (2) étant enroulée de façon hélicoïdale sur un tambour de confection (10) pour former un enroulement caoutchouc et pressée contre le tambour (10) par un rouleau de pression (9), du cord de renforcement (12) étant enroulé de façon hélicoïdale par un dispositif de bobinage de cord (13) autour de la plaque caoutchouc (2) à une tension et distance de fil présélectionnées, le cord étant coupé, une nouvelle bande caoutchouc étant tirée de l'accumulateur de bandes caoutchouc (1) et pressée dans une ou plusieurs couches contre la plaque caoutchouc (23) garni de cord, l'enroulement caoutchouc (23) renforcé produit de cette façon étant coupé de manière hélicoïdale et sans tension à un certain angle par rapport à l'axe du tambour au moyen d'un dispositif de coupe, la séparation étant effectuée en fonction de la circonférence du tambour de confection (10) et de la largeur de la bande à fabriquer par une ou plusieurs coupes à une distance et angle présélectionnés, la(les) pièce(s) d'enroulement coupée(s) est(sont) posée(s) sur un tapis de transport (20) et amenée(s) vers un dispositif d'épissurage tandis que le tambour de confection (10) est revêtu de nouveau de couches caoutchouc,
**caractérisé en ce que**
dans le dispositif d'épissurage, l'extremité amenée de la pièce d'enroulement est reliée à l'extrémité libre de la pièce d'enroulement précédente en coupant le caoutchouc saillant les derniers fils des deux pièces et
en ce que les bandes jointes de cette façon par épissurage sont transportées par un dispositif de tirage vers un dispositif d'enroulage où elles sont enroulées en commun avec un intercalaire.

2. Procédé selon revendication 1,
**caractérisé en ce que**
un ordinateur commande et règle toutes les étapes de procédé.

3. Procédé selon revendication 1,
**caractérisé en ce que**
la plaque caoutchouc ou bien l'enroulement coupé est tenu sur le tambour de confection au moyen d'un dispositif à vide.

4. Procédé selon les revendications 1 à 3,
**caractérisé en ce que**
la plaque caoutchouc peut être thermorégulée avant et/ou durant l'enroulage sur le tambour de confection.

5. Procédé selon les revendications 1 à 4,
**caractérisé en ce que**
le rouleau de pression est entraîné de façon synchrone avec le tambour de confection.

6. Procédé selon revendication 5,
**caractérisé en ce que**
la bande caoutchouc est fixée au rouleau de pression au moyen d'un dispositif à vide.
